# EUROPEAN PATENT APPLICATION

(11) **EP 3 144 825 A1**
(43) Date of publication of application: **22.03.2017**
(21) Application number: 15185435.3
(22) Date of filing: 16.09.2015
(51) Int. Cl.: G06F 17/30

(54) **ENHANCED DIGITAL MEDIA INDEXING AND RETRIEVAL**

(71) Applicant: Valossa Labs Oy, 90570 Oulu (FI)
(72) Inventor: RAUTIAINEN, Mika, 90810 Kiviniemi (FI); HUTTUNEN, Henri, 90570 Oulu (FI); KASSINEN, Otso, 90570 Oulu (FI)
(74) Representative: Boco IP Oy Ab

(57) **Abstract**

An enhanced method for indexing and retrieval of digital media entities is presented. Furthermore the method utilizes descriptive search queries and augmented digital media models for searching the digital media entities.

## Description

### Technical field

Examples of the present invention relate to enhancing content-based digital media content indexing and retrieval. More specifically, the examples of the present invention relate to methods, apparatuses, systems and related computer program products for a descriptive digital media content search engine platform.

### Background

Internet search engines are generally based on using keywords. When a user is searching information on a topic the search results are typically most relevant when the keywords are chosen precisely. When the user is searching for a specific digital media content, for example a movie, the search results are most relevant when the keywords include unique identifiers like name of the movie, actor, director etc. Some common video search engines may further utilize genre information and short description texts about movies. Yet, sometimes the user is not able to remember any or enough unique identifiers for the search engine to find the desired movie.

Current search engines are not capable of retrieving relevant content when the user is using descriptive attributes and they provide bad or no search results. This causes bad user experience for the user but also generates a risk for a movie content provider of losing potential customers trying to find the desired movie.

### Summary

According to one example embodiment, a method for searching digital media entities is presented. In the method a descriptive query is received and pre-processing the descriptive query including forming descriptive query terms. The descriptive query terms are assigned with preference criteria.

The method further includes extracting at least one query term subset from the descriptive query terms and creating, using the descriptive query, a general result list comprising at least one digital media entity and creating, using the at least one query term subset, alternative result lists comprising at least one digital media entity. The general result list and the alternative results list are combined using the preference criteria and a final result list of digital media entities is provided.

According to another embodiment the preference criteria comprises order of the descriptive query terms.

According to another embodiment the preference criteria comprises detected novelty words in the descriptive query terms.

According to another embodiment the preference criteria comprises frequency of the descriptive query terms.

According to another embodiment the general result list is ordered using preference criteria and late fusion.

According to another embodiment the descriptive query terms are added to the descriptive query before creating the general result list.

According to another embodiment the detected novelty word are considered with high relevance.

According to another embodiment, the pre-processing of the query terms comprises detecting at least one of detecting stop words or trigger words.

According to another example embodiment a computer program product for searching digital media entities including one or more sequences of one or more instructions which, when executed by one or more processors, cause an apparatus to perform the steps to receive a descriptive query, pre-process the descriptive query and forming descriptive query terms.

Assign the descriptive query terms preference criteria and extract at least one query term subset from the descriptive query terms. Furthermore to create, using the descriptive query, a general result list comprising at least one digital media entity and create, using the at least one query term subset, alternative result lists comprising at least one digital media entity and combine the general result list and the alternative results list using the preference criteria and provide a final result list of digital media entities.

According to another embodiment the preference criteria comprises order of the descriptive query terms.

According to another embodiment the preference criteria comprises detected novelty words in the descriptive query terms.

According to another embodiment the preference criteria comprises frequency of the descriptive query terms.

According to another embodiment the general result list is ordered using preference criteria and late fusion.

According to another embodiment the descriptive query terms are added to the descriptive query before creating the general result list.

According to another embodiment the pre-processing of the query terms comprises detecting at least one of detecting stop words or trigger words.

According to another example embodiment, a method in a server device for indexing digital media entities comprising:
- receiving initial set of metadata relating to digital media entities;
- creating digital media models for the digital media entities using at least part of the metadata;
- receiving descriptive data relating to the digital media entities;
- analyzing the descriptive data and augmenting the digital media models;
- utilizing automatic novelty detection to identify most relevant data;
- creating descriptive search index for the digital media entities using the augmented digital media models.

The present invention brings many advantages to searching digital media content. When the user is not able to remember unique identifiers or prefers using descriptive attributes to find for example a movie. Use of descriptive attributes is emphasized with the current trend towards voice operated user interfaces, where the users define search queries more descriptively than with keyboard interfaces - the users prefer using normal spoken language instead of listing keywords.

One of the problems the current invention solves is a situation where users do not know exactly what digital media they are looking for and they are using natural language freely to describe their preferred digital media content for consumption. Descriptive search, as described in this document, focuses on a known problem where verbose queries or mismatching vocabulary causes a digital media system or service to provide an empty set of results, a scenario that is typical in contemporary digital media search systems.

The problem is significant, according to some web search statistics the specificity and sophistication of searches has increased along the years of internet use. This is indicated by the increase in average query length. The sophistication of searches has accelerated recently due to rising popularity of voice-activated search.

According to some information retrieval researchers, contemporary search engines do not perform well with verbose queries due to high degree of specificity, noise, rarity, lack of natural language parsing and difficulty in distinguishing between the key and complementary concepts.

The current invention addresses these problems in novel fashion through natural language processing and deep content analysis through augmented digital media models, i.e. models built from the analysis of actual audio-visual content and other content descriptive data. Embodiments of the invention may involve creation of mapping between the user's descriptive intent and the constructed digital media model via descriptive search engine.

Applicability of embodiments of the current invention can be demonstrated with descriptive digital media search service, which will be discussed in detail later in this document. Embodiments of the current invention provide significant contribution to the state of the art by improving the utility of voice-operated software and apparatuses for conversational digital media search.

Let us consider a use case problem, where a person is trying to find a movie he has seen many years ago and remembers basically only one scene from the movie. In that scene an actor participates in an illegal drag race with his 1955 Chevrolet and crashes it. Using for example a voice operated input he dictates "This movie, where the guy crashes his '55 Chevy in a drag race". Such a search string gives no results using current video search services, but a service according to the current invention would provide movie "American Graffiti".

Being able to use the descriptive attributes the user is more likely to find the desired movie but also the user may find new movies matching the descriptive attributes. For a digital media content provider the invention brings advantages in improved user experience but also ability to provide desired content to the users.

### Brief description of the figures

The embodiments of the invention are illustrated by way of example - not by way of limitation, in the figures of the accompanying drawings:
Figure 1 illustrates a simplified arrangement where at least some example embodiments may be embodied.
Figure 2 illustrates a block diagram of a client device
Figure 3 illustrates a block diagram of a server device
Figure 4 illustrates a flow chart of a method according to an example embodiment of the invention for creating descriptive search index
Figure 5 illustrates a flow chart of a method according to an example embodiment of the invention for descriptive query analysis
Figure 6 illustrates a flow chart of a method according to an example embodiment of the invention for executing descriptive query.
Figure 7 illustrates a flow chart of a method according to an example embodiment of the invention from input to output.
Figure 8 illustrates a flow chart of a method according to an example embodiment of the invention in creating result lists.
Figure 9 illustrates a block diagram of a method according to an example embodiment of the invention in forming a digital media entity.

### Description of some embodiments

The following embodiments are exemplary only. Although the description may refer to "an", "one", or "some" embodiment(s), this does not necessarily mean that each such reference is to the same embodiment(s), or that the feature only applies to a single embodiment. Single features of different embodiments may be combined to provide further embodiments.

In the following, features of the invention will be described with a simple example of a system architecture in which various embodiments of the invention may be implemented. Only elements relevant for illustrating the embodiments are described in detail. Various implementations of the information system comprise elements that are suitable for the example embodiments and may not be specifically described herein.

Example methods, systems, apparatuses and a computer program products are presented for enhancing user experience in searching digital media entities.

As used herein, the term "Digital Media Entity, DME" refers to a digitally encoded media entity comprising information used to identify digital media content like a digital movie, a TV broadcast, an electronic book, music etc. Digital Media Entity information allows computer devices to identify, classify and recollect media content.

As used herein, the term "Digital Media Model, DMM" refers to a descriptive model for a Digital Media Entity comprising e.g. an uniquely identifiable ID, description, title, year, director, main casts etc. The Digital Media Model may further comprise

As used herein, the term "Descriptive Search Index, DSI" refers to a searchable index based on Digital Media Models.

Descriptive search of e.g. movies can be constructed defining for example attributes for production metadata (directors, main actors, year, genres), main characters ("an elf named Legolas"), objects ("the main character had a volleyball as a companion"), scenes ("main character Neo dodges bullets in slow motion"), topics ("the movie was about wine tasting on a road trip"), genres ("it was a romantic horror comedy"), sentiment ("find me feel good programming"), memorable quotes ("here's Johnny!") or audiovisual events ("exploding Death Star"), or any combination of above. Descriptive search increases flexibility in query definition and having an architecture that is able to incorporate many facets of Digital Media Entities into unified data model,

As used herein, the term "Descriptive Search Engine, DSE" refers to a proprietary application for searching Digital Media Entities descriptively. In may comprise methods including digital media information retrieval, information retrieval, artificial intelligence etc. The application software contains such instructions that, when executed by one or more processors, causes a computing device to perform tasks. The application may also be referred as software application, application program, application software, app and so on. It is to be noted that in at least some of the example embodiments also system software providing a platform for running the application can be considered functionally similar to the application. Alternatively, or in addition to, also set of instructions based on HTML5 mark-up language may be considered as an application. The application may be used on a computing device, in several computing devices, on a server or several servers and it may utilize cloud computing. Descriptive Search Engine can map flexible unstructured descriptive queries into a data model with high relevance.

As used herein, the term "Audio-visual Concept" refers to a natural language word or phrase that best represents a descriptive information entity in the Digital Media Entity essence data. It may be extracted from audio or video using methodologies from computer vision, audio analysis, pattern recognition and machine learning.

As used herein, the term "Audio-visual Concept Vocabulary" refers to a time-coded natural language vocabulary consisting of words or phrases and their confidences. It may be created by detecting Audio-visual Concepts from Digital Media Entity data. It may be extracted from video using methodologies from computer vision, audio analysis, pattern recognition and machine learning.

As used herein, the term "client device" refers to a computing device and it may be for example a laptop, desktop computer, graphics tablet, cellular phone, media system of a vehicle, an electronic noticeboard, a television, or any other device with capabilities for running at least one application and interacting with other computing devices.

As used herein, the term "server" refers to a physical or virtual computational entity capable of enhancing information and to perform computational tasks. The term server may refer to one entity or a group on entities configured to operate jointly with capabilities for running an application and interacting with at least one controller device and/or display device.

While various aspects of the invention are illustrated and described as block diagrams, message flow diagrams, flow charts and logic flow diagrams, or using some other pictorial representation, it is well understood that the illustrated units, blocks, device, system elements, procedures and methods may be implemented in, for example, hardware, software, firmware, special purpose circuits or logic, a computing device or some combination thereof.

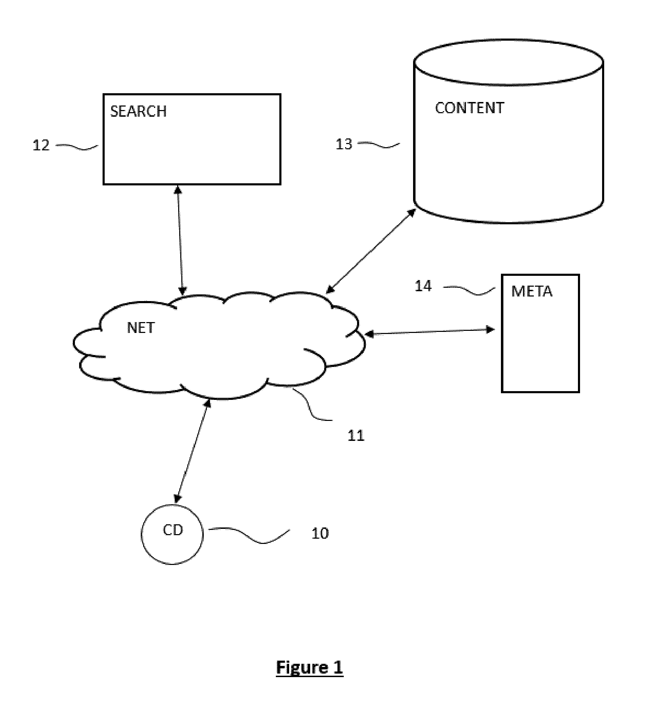

Figure 1 is a diagram of a network system capable of providing architecture for providing various embodiments of the current invention by forming together a software as service -entity. The illustrated example network system comprises device client device 10 (CD), a search server 12 (SEARCH), a content server 13 (DB), a metadata server 14 (INFO) and network 11 (NET). The network 11 represents here any combination of hardware and software components that enables a process in one communication end point to send or receive information to or from another process in another, remote communication endpoint. The network 11 may comprise, for example, a personal area network, a local area network, a home network, a storage area network, a campus network, a backbone network, a metropolitan area network, a wide area network, an enterprise private network, a virtual private network, or a combination of any of these.

The example network system of figure 1 is a simplified illustration depicting one client device 10, one search server 12, one content server 13, and one metadata server 14. The number of the elements may vary and in some example embodiments some of the elements may be non-existing and functionalities of the two or more elements may be embodied in one element. For example any two or all of the search server 12, database 13 and metadata server 14 may be embodied in one element.

Arrows between the elements in Figure 1 illustrate possible connectivity of the elements. The client device 10, the search server 12, the content server 13 and the metadata server 14 may be connected to the network 11, which allow them to exchange messages between them. As stated in the previous chapter some of the elements may be embodied in a same element, when the communication may be organized using internal protocols.

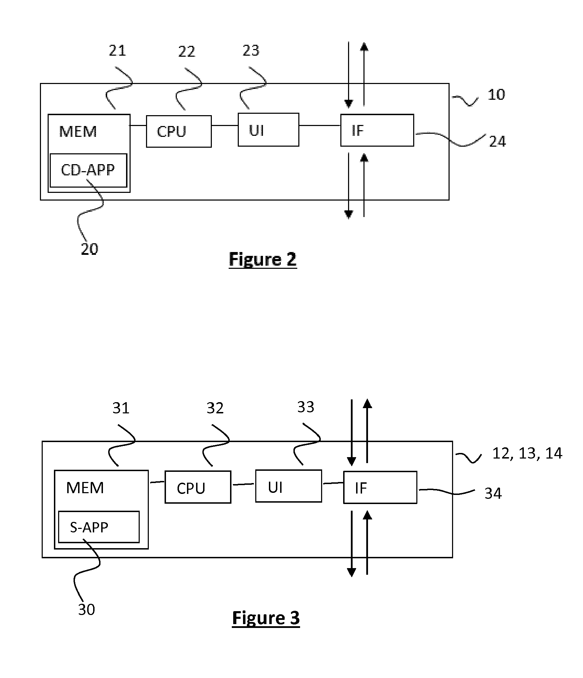

Figure 2 illustrates a simplified example block diagram of the client device 10. The client device 10 comprises at least one client device application 20 (CD-APP), which can be any kind of application or a set of applications running on the client device 10. The client device 10 may further comprise a memory 21 (MEM) for storing the playing device application 20 and other information. The memory 21 may comprise volatile or non-volatile memory, for example EEPROM, ROM, PROM, RAM, DRAM, SRAM, firmware, programmable logic, etc. The client device 10 may further comprise one or more processor units 22 (CPU) for running the client device application 30, a user interface 23 (UI) for giving instructions to the computer programs and presenting information to a user and an interface 24 (IF). In addition the client device 10 may comprise various input/output and other components like a battery, microphone, speakers, display typical for example for a smart phone or a tablet device which are not illustrated in Figure 2.

The client device application 20 may comprise for example software for accessing resources in a network. As an example when accessing digital media located in a remote database a web browser can be used or a media player application may comprise means for retrieve, present and traverse the digital media content.

Figure 3 illustrates a simplified example block diagram of server device, like the search server 12, the content server 13 or the metadata server 14. The server device may comprise a memory 31 (MEM) for storing a server device application 30 (GD-APP). The memory 31 may comprise volatile or non-volatile memory, for example EEPROM, ROM, PROM, RAM, DRAM, SRAM, firmware, programmable logic, etc. The server device may further comprise one or more processor units 32 (CPU) for processing instructions and running computer programs, like the server device application 30, and an interface unit 44 (IF) for sending and receiving messages. Functionalities of the server device applications for the search server 12, the content server 13 and the metadata server will be discussed in detail later but in general they all are capable of at least receiving, storing and providing information.

### Creating Descriptive Search Index

One target of the current invention is to create an enhanced digital media search engine allowing flexibility in search query definition and having an architecture that is able to incorporate many facets of Digital Media Entities into unified data model, a Descriptive Search Index, and having Descriptive Search Engine which can map flexible unstructured descriptive queries into the Descriptive Search Index with high relevance.

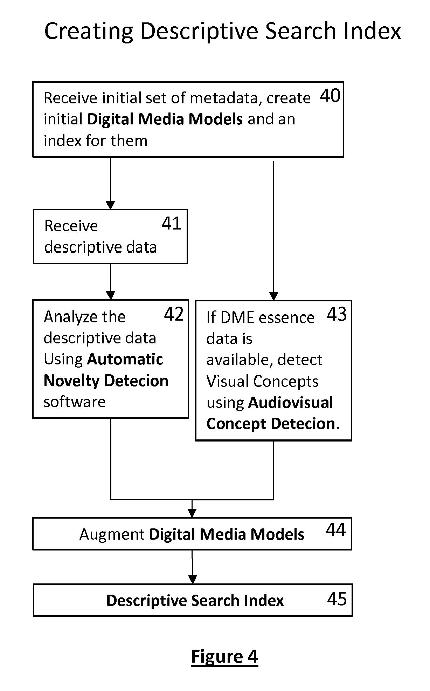

Figure 4 depicts one example of creating a Descriptive Search Index. Step 40: creating initial Digital Media Models and an index for them on the memory 31 of the search server 12. Metadata for Digital Media Entities may be fetched using an application running on the search server 12 for example from a network resource or the metadata may be downloaded or sent to the search server 12. The network source for the metadata may be for example a metadata server 14.

The metadata server 14 may be for example an electronic program guide (EPG) service or a database of information related to digital media or other suitable service. For example the Internet Movie Database (IMDb) provides information related to movies and television programs comprising information relating to cast, producers, characters, biographies etc.

For each Digital Media Entity a Digital Media Model and a unique ID is created. In this phase the Digital Entity Models comprise the metadata as described above. Types of metadata can be classified in a number of categories. Topical metadata may define title of a Digital Media Entity, production metadata people or organizations involved in producing the Digital Media Entity, genre metadata describing kind or sort of the Digital Media Entity and so on.

Step 41: For each Digital Media Entity more data may be sought. For example an automatic web indexer (web crawler, web spider...) can be used to search the Internet to find relevant descriptive data for the Digital Media Entities and to update their Digital Media Entities accordingly. The descriptive data may include for example: subtitle data, plot summaries, synopsis, description and keywords from external sites, like IMDB, TMDB, OMDb API, containing information about the Digital Media Entities. Sources of the information may include movie and TV database sites, Wikipedia, content descriptive sites, such as review sites and user generated lists of their favourites.

Some data can also originate directly from users via crowdsourcing; users type descriptive queries, which are stored and indexed during Descriptive Query Analysis, and, after receiving set of results, indicate, explicitly or implicitly, the relevant result or results from the set, which are then associated with the user inputted description.

Optionally, additional processing may be included involving data processing techniques such as clustering, natural language processing and ontology mapping, can be used to refine the mapping between user descriptive queries and Digital Media Entity items in the database.

Optionally, additional processing may be included for pre-processing the Descriptive Query e.g. by correcting spelling and language errors and identifying linguistic properties, like synonyms, related concepts and named entities of the terms to create Descriptive Query Terms.

Step 42: The descriptive data, which is unstructured text data is analysed using Automatic Novelty Detection software and Concept sets are created and the Concept sets are added to the Digital Media Models. Probabilistic free text indexes may be created using the unstructured text data and associated with the Digital Media Model. A Concept is a natural word or phrase (encoded as digital text) that represents the best a uniquely descriptive information entity. Examples of Concepts include various details relating to the Digital Media Entity, for example geographic place (where an event took place), an item (which a character used), a brand (maker of a car a character is driving) etc.

People pay attention to different details in the Digital Media Entity and for example when writing a review write about different details. One may write about beautiful streets of Monaco and another about an Aston Martin the main character is driving. For example names of characters or places can be found from subtitle data and used in creating Concepts. Concept Set Fusion is an algorithm combining Concepts extracted from unstructured text sources to produce ordered list of uniquely descriptive words which describes the Digital Media Entity content essence.

When essence data for a Digital Media Entity is available, Audio-visual Concept Vocabularies may be extracted and associated to respective Digital Media Models. Audiovisual Concept Vocabularies may be created using trained Audio-visual Concept detectors, which may comprise e.g. deep neural networks detecting objects, entities and concepts from audiovisual essence data. An example of Audiovisual Content Vocabulary is a time-coded list of audiovisual concepts that have been detected with high aggregated confidence values in temporal intervals. The confidence values and temporal encoding are utilized in Executing Descriptive Query phase when Descriptive Query Terms are matched against Audiovisual Concept Vocabulary. Optionally, the Audiovisual Concept Vocabulary can be mapped to an external semantic ontology to enable upper level ontology search between Audiovisual Vocabulary and Descriptive Query Terms.

The Automatic Novelty Detection software may be stored in the memory 31 of the search server 12. The Automatic Novelty Detection software receives unstructured descriptive data as input, preprocesses and analyzes it by creating and comparing word vectors statistically to trained corpus models. The Automatic Novelty Detection may be trained by analyzing tens of thousands of Digital Media Entities transcripts. Using statistical corpus comparison methodology, it is able to extract a set of uniquely descriptive set of keywords automatically to augment the Digital Media Model in Descriptive Search Index. As output the Automatic Novelty Detection software produces a list of Concepts. The process of extracting novelty word concepts from a TV broadcast is described in detail in a publication "An online system with end-user services: mining novelty concepts from TV broadcast subtitles", ISBN: 978-1-4503-2174-7, pages 1486 - 1489.

Novelty word extraction carries out statistical comparison between a group of Digital Media Entities (subcorpus) and a baseline corpus. As an example mathematical equations may be used to detect novelty words, i.e. words that are non-normative in a typical Digital Media Entity. These words are stored into a list of special novelty words.

Step 43: If Digital Media Entity essence data is available, Visual Concepts may be detected using Audio-visual Concept Detection. The essence data is a communicable media content in digital format e.g. a video file, an image file, an e-book file a web news article etc. The essence data may be available for example from the content server 13. An Audio-visual Concept is a natural word or phrase that represents the best a descriptive information entity in Digital Media Entity essence data. It can be extracted from a Digital Media Entity using computer vision, audio analysis, pattern recognition, machine learning and other suitable methods. For example parts of the events in a Digital Media Entity essence data may happen in a town and other parts in countryside, certain music or other sounds may be detected, animals, vehicles, weapons etc. may be detected and used in creating Audio-visual concepts.

The Audio-visual Concept Detection software may be stored in the memory 31 of the search server 12. The Audio-visual Concept Detection software receives unstructured audio-visual data as input. It extracts for example image frames from video data with predefined frequency. The image frames are analyzed using machine learning software, like Deep Neural Network, or like, which outputs list of Audio-Visual Concepts for the image frames.

The Audio-visual Concepts may be ordered e.g. using level of confidence.
Predefined temporal segmentation may be used to detect Audio-visual Concept confidence values which are accumulated to create a list of dominant Audio-visual Concepts for each temporal segment. The Audio-visual concept confidence values may further be accumulated to create a list of dominant Audiovisual Concepts for the entire Digital Media Entity. As output the Audio-visual Concept Detection software produces a list of Audio-visual Concepts.

Step 44: In this phase the Digital Media Models are augmented with the Concepts and/or Audio-visual Concepts in addition to metadata in step 40.

Step 45: A Descriptive Search Index is created.

Looking at the Figure 4 as a whole the different steps are not necessarily happening in the presented order. After the initial phase different steps may happen at any time providing new Concepts and Audio-visual Concepts for the Search Index. All steps are not mandatory for each Digital Media Entity.

### Descriptive Query Analysis

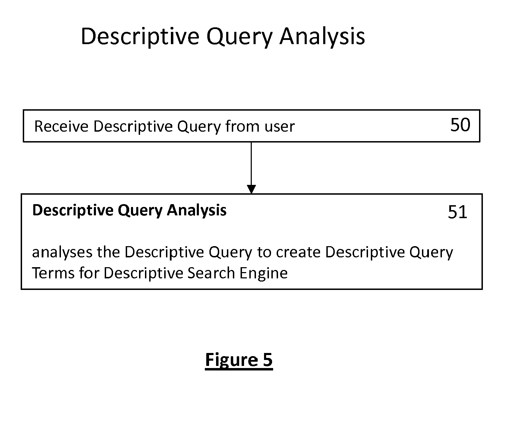

Figure 5 depicts one example of conducting a Descriptive Query Analysis, which is a process identifying Descriptive Query Terms and metadata attributes from Descriptive Query before executing Descriptive Search Engine. Descriptive Query is a query initiated by a user using natural language describing freely a content to be searched.

Step 50: The Descriptive Query may be inputted with a client device 10, using client device application 20 and user interface 23. The Descriptive Query may be sent to the search server 12 using interface 24, through network 11.

Step 51: Descriptive Query Analysis may comprise pe-processing, where elements of the Descriptive Query are identified. The element may include parts of text, parts of speech, phrases, non-relevant words etc. Next phase in the process may include extracting Descriptive Query Terms including detecting metadata and sentiment attributes.

After preprocessing, structural query elements that are relevant to the query are exposed to metadata and sentiment attribute detection, which constitutes of lookups from relevant indices; e.g. Production Metadata, such as genres, main actors, director; or Topical metadata, such as periodical setting, critical reception, thematic context; and Sentiment Attributes, e.g. sad, happy or aggressive. The resulting Descriptive Query Terms are directed to the Descriptive Search Engine. A Preference Criteria value will be assigned to every Descriptive Query Term based on the order of appearance in the list of query words.

An optional Automatic Novelty Detection sub-process may be conducted to identify key query concepts from complementary concepts, i.e. determining the descriptive power of each relevant query word, the query string is analyzed using Automatic Novelty Detection sub-process, which is similar to the sub-process in Descriptive Search Index creation phase. As a result of successful execution, query words and word sets can be assigned with additional Preference Criteria values based on computed novelty, representing comparable unique descriptiveness of a word against other query words. When computed, this value can be given as a parameter to Descriptive Search engine, which may consequently use it to assign preference weights for Digital Media Entity result lists, which may be used in Late Fusion with Preference Criteria step.

Detected metadata elements and sentiment attributes are identified and the rest is considered as Descriptive Query Terms, which can be sent to Descriptive Search Engine running on the search server 12. Sentiment attributes refer to words or phrases relating to feelings or emotions the Digital Media Entity has caused when consumed by a user. Sentiment attributes may consist terms like funny, sad, exiting etc.

During Descriptive Query Analysis, the Descriptive Query, or parts of it, may be added to the database so that the user's input can be indexed, thus producing crowdsourcing-based data that can be used for updating the Descriptive Search Index.

### Executing Descriptive Query

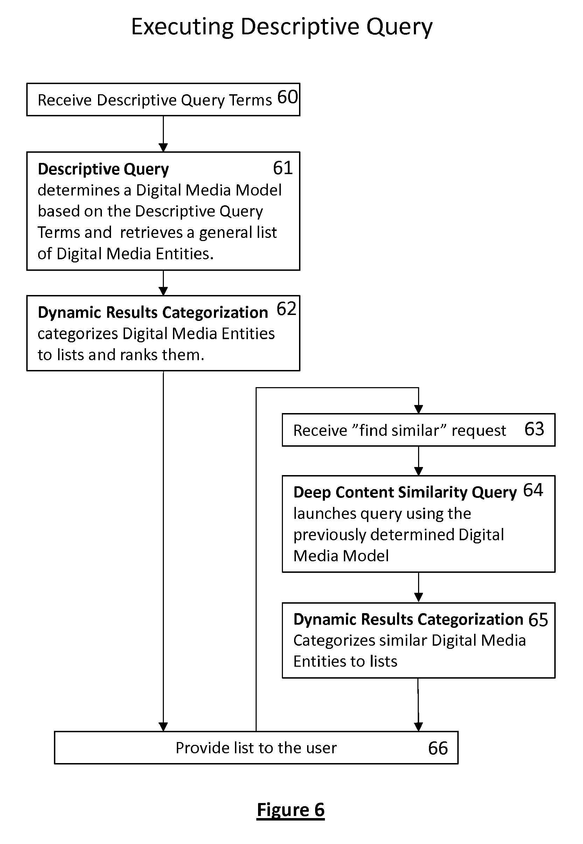

Figure 6 depicts one example of conducting an Executing Descriptive Query executed by the Descriptive Search Engine. Step 60: The Descriptive Search Engine, running on the search server 12 receives the Descriptive Query Terms from the Descriptive Query Analysis.

Step 61: The Descriptive Search Engine determines a Digital Media Model based on the received Descriptive Query Terms and retrieves matching Digital Media Entities for each Descriptive Query Term and creates a list of Digital Media Entities. Order of the Digital Media Entities may be set by using for example Late Fusion with Preference Criteria to create an ordered general result list. Late Fusion means combining different Descriptive Query Term results into the General result set using Preference Criteria, e.g. weighting based on Query Term order and preferred phrases.

The Descriptive Search Engine may execute sub queries for Descriptive Query Terms. Each Descriptive Query Term may be queried independently, but also as a full query containing the complete query text string. Digital Media Entities for each Descriptive Query Term are retrieved using appropriate search algorithm in the Descriptive Search Index. For full text content sources a probabilistic information retrieval algorithm, such as Okapi BM25, can be used, whereas Audiovisual Concept Vocabularies are matched against Descriptive Query Terms using media information retrieval algorithms. Next the obtained Digital Media Entity result lists are being combined using Late Fusion with Preference Criteria. Preference criteria is a weighting scheme that may consist of values that represent the order of the Query Terms in the query string, and/or uniquely descriptive values obtained from the Automatic Novelty Detection sub-process. Finally, the combined list of Digital Media Entities will become the ordered list of General results.

Step 62: The detected metadata elements (step 51, Fig 5) may be used to generate alternative lists of Digital Media Entities. The detected metadata elements can be used as filters, weights, sorting criteria etc. to produce multiple ordered result lists along with the General result list. For example Digital Media Entities with a common actor may form one Alternative list of "movies by actor Smith" or Digital Media Entities which have multiple genre matches with the detected metadata elements from the query may form an Alternative list of "best matching movies". For example a Query "Russell Crowe in biblical movie about flood" will result in detection of Production Metadata (actor Russell Crowe) and Topical Metadata (biblical movies).

General and/or Alternative result lists may be ranked by using Dynamic Results Categorization by using Preference Criteria. For example a General result list may be preferred when Descriptive Query do not specify any identifiable genre, but contain combinations of other metadata attributes and Descriptive Query Terms. Another example is to prefer genre based lists over the General result list when the Descriptive Query has defined multiple genres etc.

In the filtering, weighting and sorting phase, highest ranked results may also be re-ranked using computationally created aggregated popularity list, which can be created by aggregating review scores, meta scores and user generated popularities together from various sources. These popularity rankings can be obtained e.g. by crawling the World Wide Web or downloading directly from a designated site.

If matching results include movies from aggregated popularity list, their rank is increased in the final ordered results list based on their computed aggregated popularity. The aggregated popularity may be used as a tiered list, where tiers are based on the segmented popularity score and items belonging to the same tiered segment are considered to have equal popularity score.

The aforementioned tier system maintains the original result order for the Digital Media Entities that belong to the same tier, but reorders groups of results with different tiers.

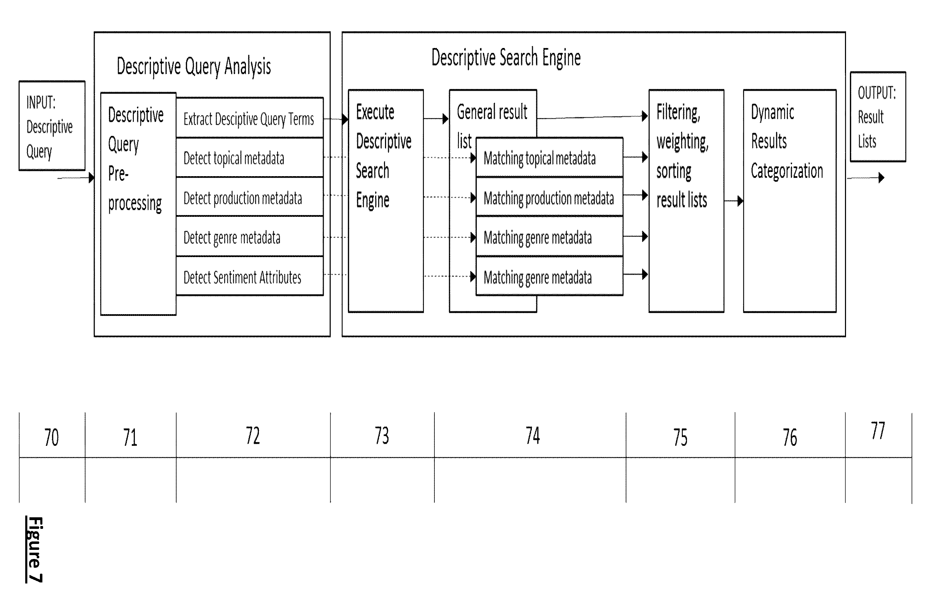

For clarity an example process from user inputted Descriptive Query to outputted result lists is depicted in one chart in Figure 7.
Phase 70: User inputs a Descriptive Query
Phase 71: Descriptive Query Analysis pre-processes the Descriptive query
Phase 72: Descriptive Query analysis extracts Descriptive Query Terms and detects topical metadata, production metadata, genre metadata and sentiment attributes
Phase 73: Descriptive Search Engine is launched using the extracted Descriptive Query Terms
Phase 74: Descriptive Search Engine generates a General result list and alternative result lists by identifying Digital Media Entities with matching metadata (topical, production, genre and sentiment)
Phase 75: Descriptive Search Engine uses methods like filtering, weighting and sorting to result lists
Phase 76: Descriptive Search Engine executes Dynamic Results Categorization to the general and/or alternative
Phase 77: Search result list is shown to the user.

Looking back at figure 6 another embodiment of the current invention is described. After conducting a search and finding the desired, or otherwise interesting, Digital Media Entity the user may want to find other similar Digital Media Entities. Step 63: on the user interface 23 of the client device 10 an option for "find similar" is shown. When the user selects the option, for example by clicking a respective button on the user interface 23 a "find similar" request is sent and received at the Descriptive Search Engine.

Step 64: Descriptive Search Engine detects the Concept Set stored in the Digital Media Model of the Digital Media Entity based on which the "find similar" is opted and executes a Deep Content Similarity Query, which is an algorithm measuring similarities between Digital Media Entities based on their Concept sets. The process is similar to the Execute Descriptive Query scenario.

Deep Content means unstructured content data, which is not typically indexed by web indexing engines. Examples are: video subtitles, encoded audio-visual content data, encoded music, encoded e-books, encoded TV-broadcasts etc.

The "find similar" operation may be triggered using any interaction with Digital Media Models in the Descriptive Search Index, or via original Descriptive Query by defining a name of the Digital Media Entity that is intended as a query example to the Deep Content Similarity Query, for example "find movies *like* Rambo", which invokes the Descriptive Search Engine.

In the above example, query Digital Media Entity is first used to identify respective Digital Media Model in the Descriptive Search Index. Then, Descriptive Search Engine uses automatically detected Concept set from the query Digital Media Model. The search process is similar to Executing Descriptive Query scenario, leading to an ordered list of most relevant Digital Media Entities. Next, Dynamic Results Categorization reorders the results by adding more weight to the results with best matching set of Genres, which is the final result list that is returned as a response to the query.

In addition, unstructured content text, or other unstructured content data about the Digital Media Entity essence or Digital Media Model may be processed using "Latent Dirichlet Allocation (LDA)", other data clustering, dimensionality reduction method befitting to the type of data or other suitable method to build topic models for the collection of DMEs. Clustering or other befitting dimensionality reduction method outputs a typical topic vector that is assigned for Digital Media Models, and is used to compute similarities against other Digital Media Entity topic vectors.

During Creating Descriptive Search Index phase, system may compute topic vector based similarities for each DME in the index and store the ordered list of results in the Digital Media Model. When executing Deep Content Similarity Query using an example Digital Media Model, Descriptive Search Engine returns ordered list of best matching results using cosine similarity between the topic vector of the query Digital Media Model and other Digital Media Models in the database.

If system has already computed the list of similar items in the database during Creating Descriptive Search Index, as described before, or via an update phase to the Descriptive Search Index, the pre-computed ordered results are returned to the user. This list can be further enhanced by sorting the ordered results based on Digital Media Entities' Genres, meaning that Digital Media Entities with same genre labels as the original Digital Media Entity get higher rank in the list.

Additionally, the results obtained using LDA can be reordered by executing second similarity query to the top results from the topic vector produced by clustering or other befitting dimensionality reduction method using Concepts or Audio-visual Concepts that have been indexed in the Digital Media Model of the Digital Media Entity during indexing phase. The results from the second similarity query are therefore a reordered list of results of the original topic vector query, which is ultimately returned as the result to the Deep Content Similarity Query.

Step 65: Dynamic Results Categorization is executed by the Descriptive Search Engine and similar Digital Media Entities are categorized to the General result list and Alternative lists based on metadata and the lists are ranked based on best matching metadata combinations.

The Alternative result lists may be ranked dynamically according to predefined logical operations, where dynamic means result list configurations that may change in each query. E.g. General results have high preference if queries don't specify any identifiable genre, and may contain combinations of other metadata attributes and Descriptive Query Terms. In another example, genre filtered result lists are preferred over Generic results when the query has defined genres or multiple genres. Production Metadata results have higher rank when the query contains solely a name of an actor or a director. Client applications and services can further use the dynamic preference ranking in their user interface layout configurations. Possible improvements to the process of Executing Descriptive Query include, for example, incremental search and parallelization of Descriptive Search Engine.

In incremental search, the Descriptive Query input may be gathered in parts, for example a word at a time, when the user inputs a voice-based search. After a client software or apparatus has recognized a word or a collection of words, it is submitted to the service or apparatus running Descriptive Query Analysis software, where the respective Query Session is maintained. Descriptive Query Analysis aggregates the Query Session with new words or collections of words dynamically, analyses the words and consequently submits them to Descriptive Search Engine.

When Descriptive Query Analysis retrieves new elements of the Descriptive Query, the displayed ordered list of most relevant DMEs is updated accordingly; this may involve re-running the Descriptive Search Engine for the entire accumulated query string or using another logic to update the resulting list of DMEs or lists based on the new input.

Incremental search can find the correct item or items before getting the entirety of the intended Descriptive Query as input, and the user also might stop the inputting of the Descriptive Query prematurely for other reasons; it should also be noted that when starting to input a Descriptive Query, the user does not necessarily know the entire Query or its end part in full, but instead the query is formed dynamically by the user during Incremental Search and the displayed incremental results might affect the user's input as well.

The incremental search feature also enables identifying of, and possibly immediately displaying the essence of, the correct Digital Media Entity, thereby stopping or pausing the search process, when the Executing Descriptive Query step for the incrementally inputted Descriptive Query has resulted, with a very high confidence, in the correct Digital Media Entity that satisfies the user's need.

Parallelization of Descriptive Search Engine is a procedure for search performance optimization based on separation between General results and Alternative results (based on metadata). It involves a process where the various Alternative lists of resulting DMEs, or a subset of these lists, or other query-related data items, before the step of Filtering, weighting and sorting the result lists, are retrieved in parallel from distributed and separate instances that may or may not be deployed on separate physical server hardware, resulting in performance improvement for the total query execution time.

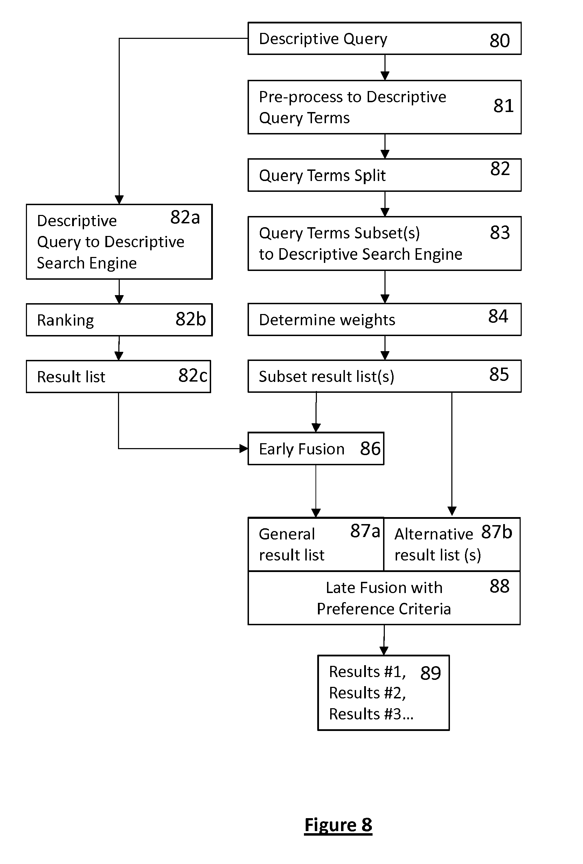

Figure 8 depicts an example method according to an embodiment of the current invention in more detail. User has inputted a search string via keyboard or orally via voice interface. The search string forms the Descriptive Query in step 80. The Descriptive Query may be pre-processed optionally or when needed, Step 81. The pre-processing may include for example filtering stop words, like the, is, at, which, and other frequent words that do not convey useful information, e.g. conjunctions and adverbs. There is no universal list of stop words and the list can be updated when needed. The stop words may be collected into a black list, which can be used to separate the uninformative words from the words that contain unique and relevant concepts to highlight novel information data.

Pre-processing may also comprise correcting spelling and language errors, identifying trigger words, identifying linguistic properties, like synonyms, related concepts and named entities of the terms. In the pre-processing the Descriptive Query is interpreted to Descriptive Query Terms.

Step 82 comprises splitting the Descriptive Query Terms. The original Descriptive Query Terms may be directed to further processing with or without the pre-processing of Step 81, which are now called Full Query Terms, Step 82a and directed to Descriptive Search Engine. The Descriptive Search Engine may use for example Okabi BM25 or other suitable ranking function (Step 82b) for ranking matching documents according to their relevance to the Full Query Terms and forming a Result list (82c).

In Step 83 the Descriptive Query Terms are split into one ore more Query Term Subsets and they are directed to the Descriptive Search Engine. The Query Term Subset may comprise on or more natural language words (Concepts) and they may be given weights based on their relevance. For example the order of words in the Descriptive Query Terms - in some situations Query Terms in the beginning of the search string may be given a higher relevance, detection of novelty words using the Automatic Novelty Detection etc. Based on which one or more Subset result list are generated (Step 85), which produce Alternative result list(s).

The result list from step 82c may be combined with the subset results from step 85 in Early Fusion (Step 86) for generating the General result list, (Step 87a). Late Fusion and Preference Criteria may be used to combine (Step 88) the General result list and the Alternative result list(s) to form final results to be provided to the user.

A use-case example according to an embodiment of the current invention, where a user is searching for a movie:
- User inputs the Descriptive Query: "fantasy movie by Peter Jackson about a mighty ring and hobbits".
- Pre-processing
   o Recognize genre trigger word "fantasy", remove words "movie" and "by".
   ∘ Remove stop words "about", "a" and "and".
- Descriptive Query Terms after pre-processing: "Peter, Jackson, mighty, ring, hobbits"
- Automatic novelty detection
   o Descriptive Query Terms reordered by word novelty: [hobbits , Jackson, Peter, ring, mighty]
- Search
   o Execute Descriptive Search Engine using the Descriptive Query and the Descriptive Query Terms: [Peter Jackson about a mighty ring and hobbits] and [hobbits, Jackson, Peter, ring, mighty].
      ▪ "Peter Jackson about a mighty ring and hobbits"
         - 0 results
      ▪ "hobbits"
         - 1. The Hobbit: Unexpected Journey
         - 2. The Hobbit: Desolation of Smaug
         - 3. The Lord of the Rings: Two Towers
         - 4. The Lord of the Rings: The Return of the King
         - 5. The Lord of the Rings: Fellowship of the Rings
      ▪ "Jackson"
         - 1. Michael Jackson: The Life of an Icon
         - 2. Percy Jackson & the Olympians: The Lightning Thief
         - ...
         - 130. The Lord of the Rings: Fellowship of the Ring
      ▪ "Peter"
         - 1. Hook
         - 2. Peter Pan
         - ...
         - 230. The Lord of the Rings: The Return of the King
         - 231. The Lord of the Rings: Fellowship of the Ring
      ▪ "ring"
         - 1. The Lord of the Rings: The Fellowship of the Ring
         - 2. The Lord of the Rings
         - 3. The Lord of the Rings: Two Towers
         - 4. Closing the Ring
         - 5. Green Lantern
      ▪ "mighty"
         - 1. The Mighty
         - 2. D3: The Mighty Ducks
         - ....
         - 200. The Lord of the Rings: The Fellowship of the Ring
- Result list combination
   o Search terms have weights based on their order on the search term list.
   ∘ A movie gets a score based on the rank on the result list and the search term weight
   o lists and scores are combined to form search result list:
      ▪ 1. The Lord of the Rings: Two Towers
      ▪ 2. The Lord of the Rings: The Fellowship of the Ring
      ▪ 3. The Hobbit: Unexpected Journey
      ▪ ...
      ▪ 6. Peter Pan
      ▪ ...
      ▪ 123. The Mighty
      ▪ 124. D3: The Mighty Ducks

"Peter" and "Jackson" have matches in director and actor fields in the index so metadata results "actor based matches" and "director based matches" are also returned. These lists contain movies starring or directed by Peter Jackson. These lists are shown to user depending on the Preference Criteria. Trigger word "fantasy" triggers the genre filtering so that the final result list only contains fantasy movies from the result list.

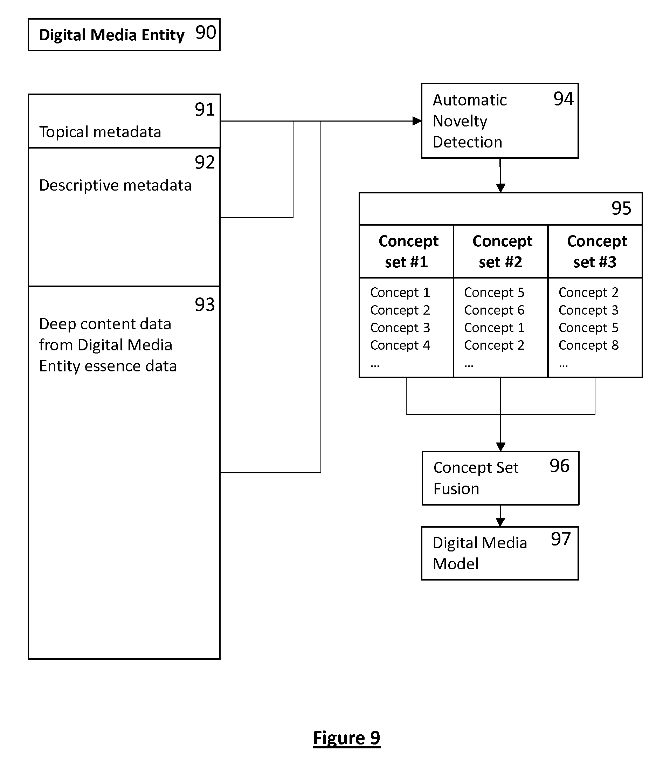

Figure 9 depicts an example embodiment of the current invention in more detail. Digital Media Entity (90) comprises Topical metadata (91), Descriptive metadata (92) and deep content data extracted from Digital Media Essence data (93). All this data is directed to Automatic Novelty Detection process and detected Concepts are given a novelty value (94). Concepts are added to the Digital Media Models (95) and Concept Set Fusion is executed to produce ordered list of uniquely descriptive words which describes the Digital Media Entity and as a result an augmented Digital Media Model is generated.

It is apparent to a person skilled in the art that as technology advances, the basic idea of the invention can be implemented in various ways. The invention and its embodiments are therefore not restricted to the above examples, but they may vary within the scope of the claims.

## Claims

1. A method for searching digital media entities comprising:
- receiving a descriptive query;
- pre-processing the descriptive query and forming descriptive query terms;
- assigning preference criteria for the descriptive query terms;
- extracting at least one query term subset from the descriptive query terms;
- creating, using the descriptive query, a general result list comprising at least one digital media entity;
- creating, using the at least one query term subset, alternative result lists comprising at least one digital media entity;
- combining the general result list and the alternative results list using the preference criteria;
- providing a final result list of digital media entities.

2. The method of claim 1, wherein the preference criteria comprises order of the descriptive query terms.

3. The method of claim 1, wherein the preference criteria comprises detected novelty words in the descriptive query terms.

4. The method of claim 1, wherein the preference criteria comprises frequency of the descriptive query terms.

5. The method of claim 1, wherein the general result list is ordered using preference criteria and late fusion.

6. The method of claim 1, wherein the descriptive query terms are added to the descriptive query before creating the general result list.

7. The method of claim 3, wherein the detected novelty word are considered with high relevance.

8. The method of claim 7, wherein the pre-processing of the query terms comprises detecting at least one of detecting stop words or trigger words.

9. A computer program product for searching digital media entities including one or more sequences of one or more instructions which, when executed by one or more processors, cause an apparatus to perform at least he steps to:
- receive a descriptive query;
- pre-process the descriptive query and forming descriptive query terms;
- assign preference criteria for the descriptive query terms;
- extract at least one query term subset from the descriptive query terms;
- create, using the descriptive query, a general result list comprising at least one digital media entity;
- create, using the at least one query term subset, alternative result lists comprising at least one digital media entity;
- combine the general result list and the alternative results list using the preference criteria;
- provide a final result list of digital media entities.

10. The computer program product of claim 9, wherein the preference criteria comprises order of the descriptive query terms.

11. The computer program product of claim 9, wherein the preference criteria comprises detected novelty words in the descriptive query terms.

12. The computer program product of claim 9, wherein the preference criteria comprises frequency of the descriptive query terms.

13. The method of claim 9, wherein the general result list is ordered using preference criteria and late fusion.

14. The method of claim 9, wherein the descriptive query terms are added to the descriptive query before creating the general result list.

15. The method of claim 9, wherein the pre-processing of the query terms comprises detecting at least one of detecting stop words or trigger words.
